# EUROPEAN PATENT APPLICATION

(11) **EP 4 053 006 A1**
(43) Date of publication of application: **07.09.2022**
(21) Application number: 21160239.6
(22) Date of filing: 02.03.2021
(51) Int. Cl.: B62K 23/06, B62J 1/08, B62K 25/04

(54) **LEVER UNIT**

(71) Applicant: Öhlins Racing AB, 194 27 Upplands Väsby (SE)
(72) Inventor: ANDERSSON, Pontus, 175 50 Järfälla (SE); VIDAL, Cesar Rojo, 08019 Barcelona (ES)
(74) Representative: AWA Sweden AB

(57) **Abstract**

A lever unit (100) for adjusting a suspension arrangement of a mountain bike, wherein the suspension arrangement comprises a front shock absorber, a rear shock absorber and a telescopic seat post. The lever unit (100) comprises a first lever (110) and a second lever (120) mechanically coupled to the front shock absorber and to the rear shock absorber wherein the first lever (110) and the second lever (120) are configured to actuate a plurality of modes of the front shock absorber and the rear shock absorber. Additionally, at least one of the first lever (110) and second lever (120) is mechanically coupled to the telescopic seat post and configured to actuate said telescopic seat post

## Description

### FIELD OF THE INVENTION

The present inventive concept generally relates to a lever unit for use in a bicycle, for example a mountain bike. More specifically, the present inventive concept is related to a lever unit for adjusting a suspension arrangement of a mountain bike.

### BACKGROUND OF THE INVENTION

Mountain bikes of various types have attracted and continue to attract attention. The development of these mountain bikes has led to a strong majority comprising a combination of a front shock absorber, a rear shock absorber and an adjustable seat post. The growing interest for this combination of suspensions stems from the increase in performance it provides to the cyclist and the longevity it enables for the mountain bike having to sustain hazardous terrains over long periods of time.

More particularly, there is presently an interest in the capacity of adjusting the front suspension, the rear suspension and the seat post during the use of the mountain bike to adapt the absorption of the shock absorbers and the height of the set post to the terrain to which the bike is subjected. These adjustments are most commonly performed via rotation of actuators positioned on the shock absorbers and via an additional remote added to the handlebar of the mountain bike for adjusting the seat post.

However, the adjustment of the front and rear shock absorbers requires the cyclist to release at least one hand from the handlebar in order to reach each shock absorber which increases the risk of accidents particularly if the adjustment is performed while the mountain bike is in motion. Furthermore, the additional remote mounted on the handlebar generates cluttering of said handlebar making it harder for the cyclist to maneuver the mountain bike.

Hence, it is an object of the present inventive concept to try to alleviate at least some of the deficiencies of present shock absorbers and seat post adjustment systems regarding safety of the cyclist and maneuverability of the mountain bike.

### SUMMARY OF THE INVENTION

It is an object of the present disclosure to overcome at least some of the above-mentioned deficiencies in order to improve the safety and the maneuverability of mountain bikes.

This and other objects are achieved by providing a lever unit for adjusting the suspension arrangement of a mountain bike having the features in the independent claim. Preferred embodiments are defined in the dependent claims.

Therefore, according to a first aspect of the present inventive concept, there is provided a lever unit for adjusting a suspension arrangement of a mountain bike, wherein the suspension arrangement comprises a front shock absorber, a rear shock absorber and a telescopic seat post. The lever unit comprises a first lever and a second lever mechanically coupled to the front shock absorber and to the rear shock absorber wherein the first lever and the second lever are configured to actuate a plurality of modes of the front shock absorber and the rear shock absorber. Additionally, at least one of the first lever and second lever is mechanically coupled to the telescopic seat post and configured to actuate said telescopic seat post.

Thus, the present inventive concept is based on the idea of providing one individual lever unit for adjusting each one of the front shock absorber, the rear shock absorber and the telescopic seat post of the suspension arrangement of a mountain bike. The present inventive concept therefore stems from the idea of providing a lever unit representing a single point of adjustment of the suspension arrangement, mounted on the handlebar of the mountain bike, such that cluttering of the handlebar is reduced to a minimum and its maneuverability is improved. By the term "cluttering" it is here meant the accumulation of various components mounted in series on the handlebar such as brake levers, gear shifters, handles, etc. The general aim of the present inventive concept also arises from improving the safety of the mountain bike and optimizing the use of the suspension arrangement both resulting in the improvement of the performance of the mountain bike.

The performance of the mountain bike is greatly improved by the suspension arrangement as such. The present inventive concept is advantageous in that the suspension arrangement comprises a shock absorber in the front for principally absorbing forces generated by impacts sustained by the front wheel and a shock absorber in the rear for principally absorbing forces generated by impacts sustained by the rear wheel. Furthermore, the telescopic seat post enables the adjustment of the position of the user depending on the type of terrain the mountain bike is subjected to therefore facilitating the transfer of weight of the user over the mountain bike as well as the transfer of force from the user to the mountain bike. In other words, for steeper descending terrain, the telescopic seat post may be adjusted to a shorter height avoiding obstructing the position of the user being transferred towards the rear wheel of the mountain bike. Alternatively, for flatter and ascending terrain, the telescopic seat post may be adjusted to a higher height allowing a greater transfer of the force generated by the user to the pedals of the mountain bike, mechanically translated thereafter into a forward movement of the mountain bike. Hence, the suspension arrangement of the present inventive concept provides the effect of absorbing a substantial part of the impacts sustained by the mountain bike therefore limiting the transfer of these impact to the user's body. By the term "user" it is here meant cyclist operating the mountain bike. By the term "terrain" it is here meant the ground or surface on which the mountain bike progresses in a forward motion operated by the user.

The adjustment of the suspension arrangement of the present inventive concept is operated via the first and second lever comprised in the lever unit. The first lever and the second lever are advantageous in that their mechanical coupling with the front shock absorber and with the rear shock absorber provides a single point of control for the adjustment of the shock absorbers. The first and second lever further allow the minimization of the movement required by the user of the mountain bike to perform the adjustment of the suspension arrangement thus resulting in the improvement of the rapidity with which the adjustment is performed. For example, a movement of the thumb of the user to actuate the first or the second lever may represent the only movement required and may be achievable without removal of the hand from the handlebar. The actuation, which may comprise a rotation of the first or second lever, may further be translated into an adjustment of the front shock absorber, the rear shock absorber, and/or the telescopic seat post via the mechanical coupling.

The adjustment of the front shock absorber and the rear shock absorber may be understood as the actuation of various modes through the rotational movement of the first and second lever mechanically coupled to the front and rear shock absorbers. The plurality of modes of the present inventive concept allow the front and rear shock absorbers to be specifically adapted to each type of terrain the mountain bike is subjected to during use. The first and second levers therefore permit the optimization of the performance of the front and rear shock absorbers through the actuation of the plurality of modes which in turn results in the improvement of the performance of the mountain bike over each type of terrain and particularly over the length of life cycle of the mountain bike. The plurality of modes of the front and rear shock absorbers are further advantageous in that they may increase the longevity of use of the mountain bike.

The adjustment of the telescopic seat post may be understood as the actuation of the maximum height of the telescopic seat post. In other words, through the rotational movement of at least one of the first and second lever mechanically coupled to telescopic seat post, the telescopic seat post may extend to its maximum height. It will be appreciated that the maximum height of the telescopic seat post may be configured by the user prior to utilization of the mountain bike. It will further be appreciated that the minimum height of the telescopic seat post may be configured by the user prior to utilization of the mountain bike or may be limited by the physical structure of the mountain bike, e.g. the frame of the mountain bike. It will also be appreciated that intermediate heights of the telescopic seat post, i.e. heights between the minimum height and the maximum height, may be achieved and adjusted by a pressure applied by the user on the saddle connected to the telescopic seat post to set the desired height. The actuation of the telescopic seat post through the movement of at least one of the first lever and second lever enables the lever unit of the present inventive concept to adjust both the front and rear shock absorbers as well as the telescopic seat post via the movement of only at least one of the two levers. In other words, the present inventive concept enables the consolidation of the adjustment of the suspension arrangement to the first and second lever of the lever unit rendering unnecessary the use of a third lever or the use of a separate lever unit specifically for the actuation of the telescopic seat post. The actuation of the telescopic seat post by at least one of the first lever and second lever therefore results in the reduction of cluttering of the handlebar of the mountain bike and in the minimization of the movement required by the user of the mountain bike to perform the adjustment of the suspension arrangement. It will be appreciated that the consolidation of the adjustment of the suspension arrangement to only two levers enables the requirement of fewer components and the reduction of the complexity of the lever unit.

According to some embodiments of the present inventive concept, the plurality of modes of the front shock absorber and the rear shock absorber may comprise a first mode, a second mode and a third mode. By the term "mode" it is here meant a function of the front and rear shock absorber permitting the absorbers to adapt the mountain bike to different types of terrain. For example, the first mode may be a decent mode herein understood as a mode for which the air spring rate and damping capacity of the front shock absorber and the rear shock absorber is fully actuated thus enabling a greater damping and a faster return. The third mode may be a locked mode herein understood as a mode for which the front and rear shock absorbers are locked therefore providing no damping to the mountain bike. The second mode may be a traction control mode herein understood as an intermediate mode between the decent mode and the locked mode and for which the air spring rate and damping capacity of the front shock absorber and the rear shock absorber is actuated to a fraction of its full capacity. It will be appreciated that additional modes may be comprised in the plurality of modes depending on the design and construct of the front and rear shock absorbers. The first, second and third modes are advantageous in that they enable adaptability of the technical parameters, e.g. air spring rate, damping capacity, etc., of the front shock absorber and of the rear shock absorber in relation to the terrain to which the mountain bike is subjected. The first, second and third modes therefore improve the performance of the mountain bike and the safety of its user. It will further be appreciated that the front shock absorber and the rear shock absorber may also comprise only two mode, preferably the first mode and the third mode.

According to some embodiments of the present inventive concept, the first lever may be configured to be selectively moved from a neutral position to a first end position or from a neutral position to a second end position. The neutral position may be understood as the initial position of the first lever in the lever unit before any selective movement of the first lever. It will be appreciated that the first lever is automatically returned to the neutral position after each selective movement to the first end position or to the second end position. The first end position may be understood as the first position to be reached by the first lever to actuate at least one of the modes of the plurality of modes of the front and rear shock absorber. The second end position may be understood as the second position to be reached by the first lever to actuate at least one of the modes of the plurality of modes of the front and rear shock absorber. It will be appreciated that the first lever requires a greater movement to reach the second end position than the movement required to reach the first end position. The selective movement of the first lever to the first or second end positions is therefore advantageous in that it enables the actuation of the plurality of modes of the front shock absorber and the rear shock absorber.

According to some embodiments of the present inventive concept, the first lever may be mechanically coupled to the front shock absorber and to the rear shock absorber via a first mechanism wherein the first mechanism may comprise a position holding arrangement in turn comprising at least a first holding position, a second holding position and a third holding position. The first mechanism therefore permits the conversion of the movement of the first lever to the first end position or to the second end position into a mechanical movement which actuates respective modes of the plurality of modes of the front and rear shock absorbers. Moreover, the first, second and third holding positions allow the first mechanism to actuate the first, second or third mode of the front and rear shock absorbers and to maintain the mode actuated until further manipulation by the user. The first, second and third holding positions of the first mechanism therefore insure that the plurality of modes of the front shock absorber and the rear shock absorber may only be adjusted upon interaction between the user and the lever unit.

According to some embodiments of the present inventive concept, the first holding position, the second holding position and the third holding position of the first mechanism may be configured to respectively actuate the first mode, the second mode and the third mode of the front shock absorber and the rear shock absorber. The first, second and third holding positions of the first mechanism therefore respectively enable the first mode, second mode and third mode of the front shock absorber and rear shock absorber to remain actuated until further manipulation by the user.

According to some embodiments of the present inventive concept, upon a first movement of the first lever from the neutral position to the first end position, the first mechanism may be adapted to transition from the first holding position to the second holding position and actuate the second mode of the front shock absorber and the rear shock absorber from the first mode. In other words, when considering the first mode as the mode initially actuated for the front shock absorber and rear shock absorber, the first movement of the first lever to the first end position enables the user to adjust both shock absorbers to the second mode. The actuation of the second mode allows the technical parameters of the front and rear shock absorbers to be adapted to a flat of slightly inclined terrain thus improving the performance of the mountain bike when subjected to such terrain.

According to some embodiments of the present inventive concept, upon a second movement of the first lever from the neutral position to the first end position, subsequent to the first movement of the first lever, the first mechanism may be adapted to actuate the third mode of the front shock absorber and rear shock absorber from the second mode. In other words, when considering the second mode as the mode actuated after the first movement of the first lever, the second movement of the first lever to the first end position enables the user to adjust both shock absorbers to the third mode. The actuation of the third mode allows the technical parameters of the front and rear shock absorbers to be adapted to steeper ascending terrain thus improving the performance of the mountain bike when subjected to such terrain.

According to some embodiments of the present inventive concept, upon a third movement of the first lever from the neutral position to the second end position, the first mechanism may be adapted to actuate the third mode of the front shock absorber and rear shock absorber from the first mode. In other words, when considering the first mode as the mode initially actuated for the front shock absorber and rear shock absorber the third movement of the first lever directly to the second end position enables the user to adjust both shock absorbers to the third mode. The actuation of the third mode allows the technical parameters of the front and rear shock absorbers to be adapted to steeper ascending terrain thus improving the performance of the mountain bike when subjected to such terrain.

According to some embodiments of the present inventive concept, the second lever may be configured to be selectively moved from a main position to a release position. The main position may be understood as the initial position of the second lever in the lever unit before any selective movement of the second lever. It will be appreciated that the main position may be aligned with the neutral position of the first lever such that the first lever and the second lever of the lever unit are superimposed in the lever unit. The release position may be understood as the position to be reached by the second lever to actuate at least one of the plurality of modes of the front and rear shock absorbers. It will be appreciated that the selective movement of the second lever to the release position may be configured to actuate the mode previously actuated by the selective movement of the first lever to the first end position or to the second end position. The selective movement of the second lever to the release position is therefore advantageous in that it enables the actuation of the plurality of modes of the front shock absorber and the rear shock absorber.

According to some embodiments of the present inventive concept, the second lever may be mechanically coupled to the front shock absorber and the rear shock absorber via a second mechanism wherein the second mechanism may comprise a position releasing arrangement in turn comprising a first release channel and a second release channel. The second mechanism therefore permits the conversion of the movement of the second lever to the release position into a mechanical movement which actuates respective modes of the plurality of modes of the front and rear shock absorbers. Moreover, the first and second release channels allow the second mechanism to transition from the third mode to actuate the second mode and transition from the second mode to actuate the first mode of the front and rear shock absorbers. The first and second release channels of the second mechanism therefore permit a return to modes previously actuated by the selective movement of the first lever.

According to some embodiments of the present inventive concept, the second mechanism may be configured to operate connectively with the first mechanism. For Example, when the second release channel of the second mechanism is engaged, the first mechanism transitions from the first holding position to the second holding position. Similarly, when the second release channel of the second mechanism is engaged, the first mechanism transitions from the second holding position to the third holding position. In other words, the connective operation of the first mechanism and the second mechanism may be embodied by, but not limited to, a single structure comprising both the position holding arrangement of the first mechanism and the position releasing arrangement of the second mechanism. This single structure may be understood as a single mechanism formed the first and second mechanisms and enabling the transition between the actuation of each mode of the plurality of modes of the front and rear shock absorbers.

According to some embodiments of the present inventive concept, upon a first movement of the second lever from the main position to the release position, the second mechanism may be adapted to actuate the second mode of the front shock absorber and the rear shock absorber from the third mode. In other words, when considering the third mode as the mode initially actuated for the front shock absorber and for the rear shock absorber the first movement of the second lever to the release position enables the user to adjust both shock absorbers to the second mode. The actuation of the second mode allows the technical parameters of the front and rear shock absorbers to be adapted to a flat of slightly inclined terrain thus improving the performance of the mountain bike when subjected to such terrain.

According to some embodiments of the present inventive concept, upon a second movement of the second lever from the main position to the release position, subsequent to the first movement of the second lever, the second mechanism may be adapted to actuate the first mode of the front shock absorber and the rear shock absorber from the second mode. In other words, when considering the second mode as the mode actuated after the first movement of the second lever, the second movement of the second lever to the release position enables the user to adjust both shock absorbers to the first mode. The actuation of the first mode allows the technical parameters of the front and rear shock absorbers to be adapted to steeper descending terrain improving the performance of the mountain bike when subjected to such terrain.

According to some embodiments of the present inventive concept, the at least one of the first lever and the second lever may be mechanically coupled to the telescopic seat post via a third mechanism. For example, the third mechanism may be understood as a cable and spring arrangement, a battery powered actuator, a push pull mechanism, etc. Additionally, the third mechanism is comprised within the lever unit which results in the saving of space in turn minimizing the cluttering of the handlebar of the mountain bike on which the lever unit is mounted. It will be appreciated that the third mechanism enables the possibility of adjusting the telescopic seat post and the front and rear shock absorbers all at once.

According to some embodiments of the present inventive concept, upon movement of the at least one of the first lever and the second lever to an auxiliary position, the third mechanism may be adapted to actuate an opened state of the telescopic seat post from a closed state. The opened state of the telescopic seat post may be understood as a state in which the telescopic seat post may move freely and be moved by the user to a desired height. In other words, when the opened state of the telescopic seat post is actuated, the telescopic seat post will extend to its predetermined maximum height if no resistance is generated on the telescopic seat post by the user. Alternatively, the opened state permits the user to adjust the height of the telescopic seat post by applying pressure of resistance to the seat of the seat post. Additionally, the closed state of the telescopic seat post may be understood as a state in which the movement of the telescopic set post is disabled.

According to another aspect of the present inventive concept, there is provided a mountain bike comprising a lever unit according to at least some of the above-disclosed embodiments and aspect.

According to yet another aspect of the present inventive concept, there is provided a suspension system comprising a front shock absorber, a rear shock absorber and a telescopic seat post according to at least some of the above-disclosed embodiments and aspects.

Further objectives of, features of, and advantages with, the present invention will become apparent when studying the following detailed disclosure, the drawings and the appended claims. Those skilled in the art will realize that different features of the present invention can be combined to create embodiments other than those described in the following.

### BRIEF DESCRIPTION OF THE DRAWINGS

This and other aspects of the present invention will now be described in more detail, with reference to the appended drawings showing embodiment(s) of the inventive concept.
Fig. 1a schematically shows an exploded view of a lever unit according to an exemplifying embodiment of the present inventive concept,
Fig. 1b schematically shows a perspective view of the assembled mechanical components of a lever unit according to an exemplifying embodiment of the present inventive concept,
Fig. 1c schematically shows a perspective view of an assembled lever unit according to an exemplifying embodiment of the present inventive concept,
Fig. 2a schematically shows a top view of the neutral position, first end position and second end position of the first lever of a lever unit according to exemplifying embodiments of the present inventive concept,
Fig. 2b schematically shows a top view of the main position, release position and auxiliary position of the second lever of a lever unit according to exemplifying embodiments of the present inventive concept,
Fig. 3a schematically shows an inside view of a lever unit for shown actuating the first mode of the front and rear shock absorbers according to an exemplifying embodiment of the present inventive concept,
Fig. 3b schematically shows an inside view of a lever unit shown actuating the second mode of the front and rear shock according to an exemplifying embodiment of the present inventive concept,
Fig. 3c schematically shows an inside view of a lever unit shown actuating the third mode of the front and rear shock absorbers according to an exemplifying embodiment of the present inventive concept, and
Fig. 3d schematically shows an inside view of a lever unit shown actuating the opened state of the telescopic seat post according to an exemplifying embodiment of the present inventive concept.

### DETAILED DESCRIPTION

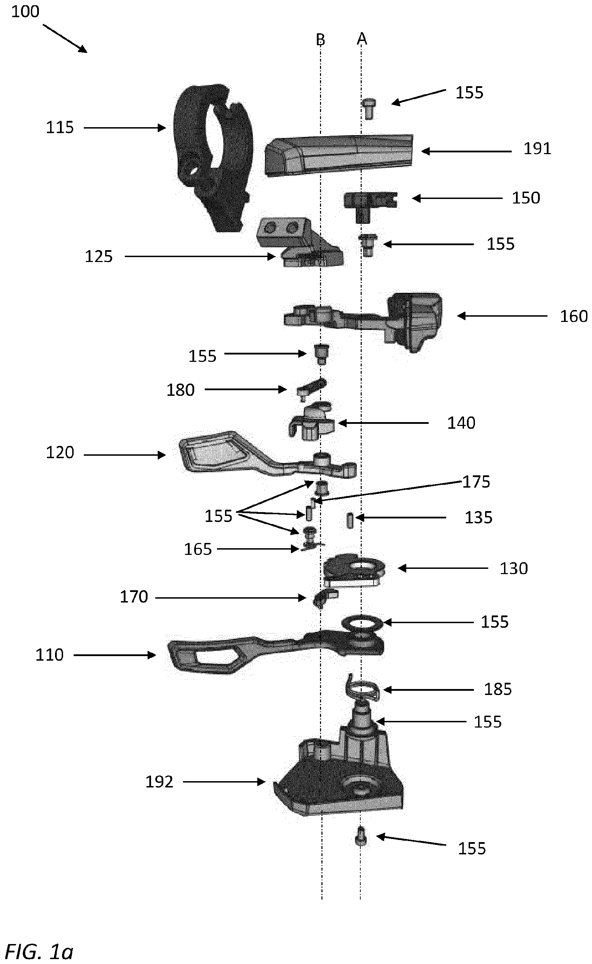

Fig. 1a schematically shows an exploded view of a lever unit 100 according to an exemplifying embodiment of the present inventive concept. Fig. 1a illustrates the components of the lever unit 100 distanced in the direction of axis, A, and axis, B. The lever unit 100 is shown having an upper cover 191 and a lower cover 192 configured to enclose the other mechanical components when the lever unit 100 is assembled. Fig. 1a further illustrates a holder 115 configured to fasten the lever unit 100 to a handlebar of a mountain bike. The holder 115 is arranged to be fixed to the attachment 125 by means of e.g. a screw or other fastening mean. The lever unit 100 further comprises an attachment member 160 arranged as a center component of the lever unit 100 to which a plurality of components are configured to be fastened, such as the attachment 125. Furthermore, Fig. 1a shows a shock absorber cable winder 150, a mechanism structure 130, a first lever 110 and a second spring 185 aligned with one another and with the axis, A, such that these components of the lever unit 100 may rotate about the axis, A. The lever unit 100 is also shown in Fig. 1a comprising a holding hook 170 and a first spring 165 configured to tension the holding hook 170 into engaging the mechanism structure 130. Fig. 1a further illustrates a seat post cable winder 140 and a second lever 120 aligned together and with axis, B, such that they may rotate about axis, B. Moreover, Fig. 1a illustrates a releasing pin 135 configured to be fixedly attached underneath the second lever 120 at its inner end and configured to engage the mechanism structure 130 when the lever unit 100 is assembled. Fig. 1a further shows a disengagement pin 175 configured to be mounted on the second lever 120 and to dislodge the holding hook 170 from its engagement of the mechanism structure 130 upon a movement of the second lever 120. Additionally, Fig.1a shows a spring-loaded rotation stopper 180 configured to be fastened on the second lever 120 and configured to limit the rotational movement of the second lever 120 by abutting the attachment member 160 when the lever unit 100 is assembled. The spring-loaded rotational stopper 180 is further configured to ensure that the second lever 120 always returns to its main position after a rotational movement generated by the user. Fig. 1a further illustrate additional components 155 comprising e.g. stopping pins, rotatable hubs, fastening screws, spacing washers, etc. and configured to enable the assembly and the functioning of the lever unit 100.

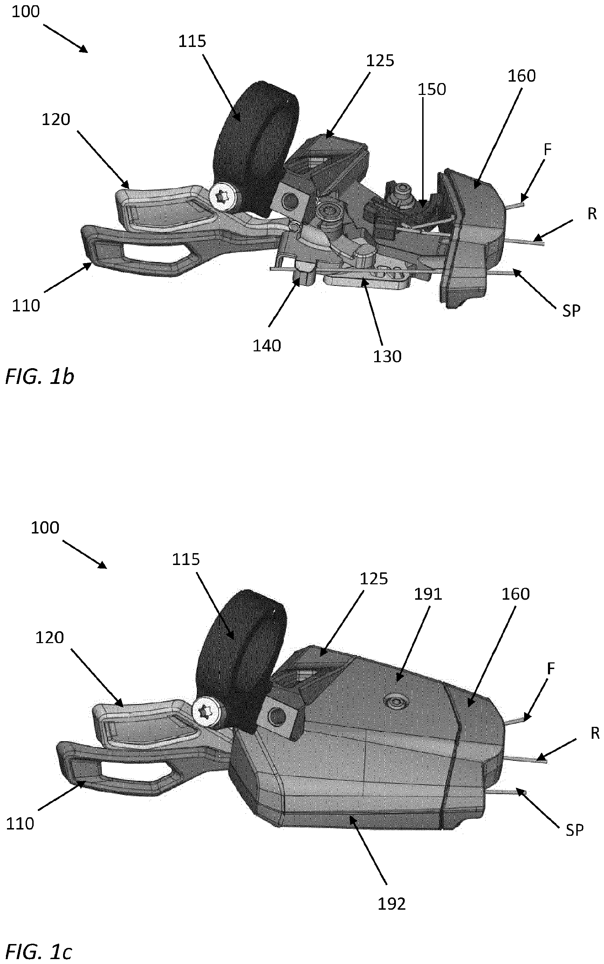

Fig. 1b schematically shows a perspective view of the assembled mechanical components of the lever unit 100 according to an exemplifying embodiment of the present inventive concept. Fig. 1b shows the first lever 110 in a neutral position and the second lever 120 in a main position such that the first lever 110 and the second lever 120 are superimposed. The assembled lever unit 100 is further shown in Fig. 1b having the holder 115 fastened to the attachment 125 which in turn is fastened to the attachment member 160. The attachment member 160 is shown in Fig. 1b as a center component on which, or through which, are fastened the first and second lever 110, 120, the mechanism structure 130, the shock absorber cable winder 150 and the seat post cable winder 140. Fig. 1b further illustrates a front shock absorber cable, F, attached to the shock absorber cable winder 150 and configured to actuate a plurality of modes of the front shock absorber when pulled or released via the rotation of the shock absorber cable winder 150. Fig. 1b similarly illustrates the rear shock absorber cable, R, attached to the shock absorber cable winder 150 and configured to actuate a plurality of modes of the rear shock absorber when pulled or released via the rotation of the shock absorber cable winder 150. It will be appreciated that the front shock absorber cable, F, and the rear shock absorber cable, R, are fastened to a spring-loaded adjustment mechanism on the front shock absorber and rear shock absorber (not shown) enabling the transition between the plurality of modes of the absorbers. Furthermore, Fig. 1b shows a seat post cable, SP, attached to the seat post cable winder 140 and configured to actuate the opened state of the telescopic seat post when pulled via the rotation of the seat post cable winder 140. It will be appreciated that the seat post cable, SP, is fastened to a seat post actuator positioned on the telescopic seat post. It is additionally embodied that the lever unit 100 may also function with only one cable being attached to the shock absorber cable winder 150 to replace the front shock absorber cable, F, and the rear shock absorber, R. In such embodiment, the single shock absorber cable would be separated into two cables before reaching the shock absorbers.

Fig. 1c schematically shows a perspective view of an assembled lever unit 100 according to an exemplifying embodiment of the present inventive concept. Fig. 1c illustrates the upper cover 191 and the lower cover 192 enclosing the mechanical components of the lever unit 100 together with the attachment 125 and the attachment member 160. Fig. 1c further shows the first lever 110 and second lever 120 extending out of the enclosure formed by the upper cover 191 and lower cover 192 such that a user may easily reach and rotate the first lever 110 and second lever 120 to adjust the suspension arrangement of the mountain bike. As illustrated in Fig. 1b, the holder 115, the front shock absorber cable, F, the rear shock absorber cable, R, and the telescopic seat post cable, SP, are shown in Fig. 1c extending from the enclosure of the lever unit 100.

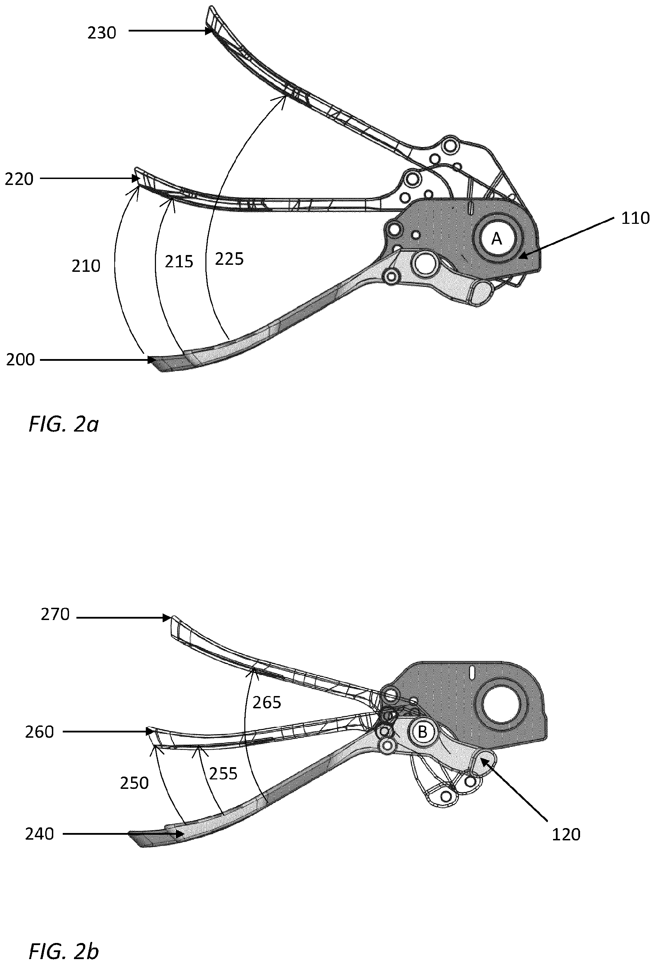

Fig. 2a schematically shows a top view of the neutral position 200, first end position 220 and second end position 230 of the first lever 110 of a lever unit according to exemplifying embodiments of the present inventive concept. The first lever 110 is shown in Fig. 2a at the neutral position 200 which represents the initial position held by the first lever 110 before any rotational movement is generated by a user. The neutral position 200 also represents the position to which the first lever 110 returns after each rotational movement. Fig. 2a illustrates a first rotational movement 210 of the first lever 110 about the axis, A, enabling the transition of the first lever 110 from the neutral position 200 to the first end position 220. It will be appreciated that the first rotational movement 210 of the first lever 110 to the first end position 220 results in the actuation of the second mode of the shock absorbers from the first mode. Fig. 2a further illustrates a second rotational movement 215 of the first lever 110 about the axis, A, enabling the transition of the first lever 110 from the neutral position 200 to the first end position 220. It will be appreciated that the second rotational movement 215 of the first lever 110 to the first end position 220 results in the actuation of the third mode of the shock absorbers from the second mode, provided said second rotational movement 215 is subsequent to the first rotational movement 210. Furthermore, Fig. 2a depicts a third rotational movement 225 of the first lever 110 about the axis, A, enabling the transition of the first lever 110 from the neutral position 200 to the second end position 230. It will be appreciated that the third rotational movement 225 of the first lever 110 to the second end position 230 results in the actuation of the third mode of the shock absorbers from the first mode.

Fig. 2b schematically shows a top view of the main position 240, release position 260 and auxiliary position 270 of the second lever 120 of a lever unit according to exemplifying embodiments of the present inventive concept. The second lever 120 is shown in Fig. 2b at the main position 240 which represents the initial position held by the second lever 120 before any rotational movement is generated by a user. The main position 240 also represents the position to which the second lever 120 returns after each rotational movement. Fig. 2b illustrates a first rotational movement 250 of the second lever 120 about the axis, B, enabling the transition of the second lever 120 from the main position 240 to the release position 260. It will be appreciated that the first rotational movement 250 of the first lever 120 to the release position 260 results in the actuation of the second mode of the shock absorbers from the third mode. Fig. 2b further illustrates a second rotational movement 255 of the second lever 120 about the axis, B, enabling the transition of the second lever 120 from the main position 240 to the release position 260. It will be appreciated that the second rotational movement 255 of the second lever 120 to the release position 260 results in the actuation of the first mode of the shock absorbers from the second mode, provided said second rotational movement 255 is subsequent to the first rotational movement 250. Furthermore, Fig. 2b depicts a third rotational movement 265 of the second lever 120 about the axis, B, enabling the transition of the second lever 120 from the main position 240 to the auxiliary position 270. It will be appreciated that the third rotational movement 260 of the second lever 120 to the auxiliary position 270 results in the actuation of the first mode of the shock absorbers from the mode actuated prior to the third rotational movement 265 and results in the actuation of the opened state of the telescopic seat post from a closed state.

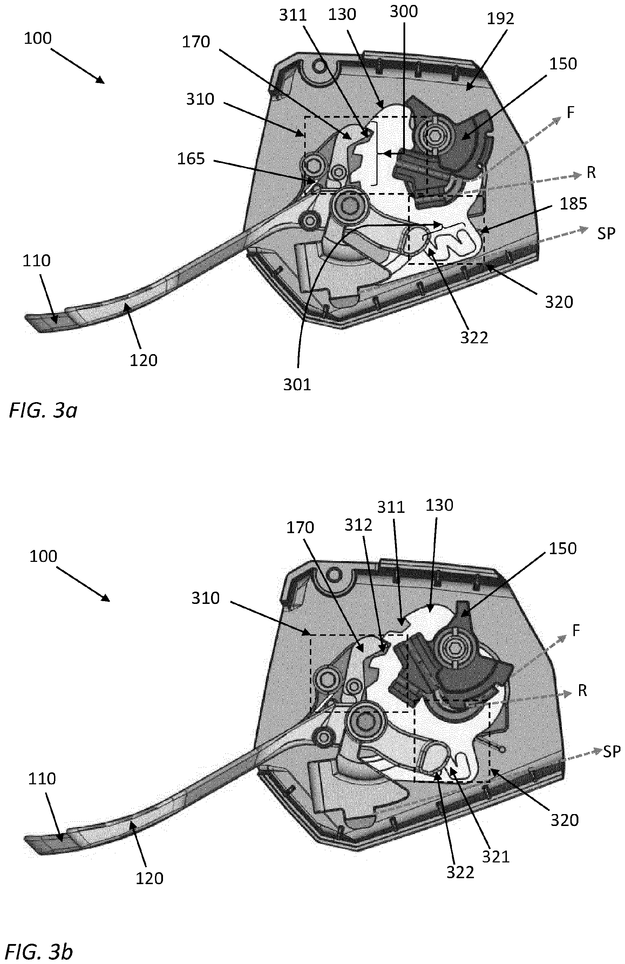

Fig. 3a schematically shows an inside view of the lever unit 100 shown actuating the first mode of the front and rear shock absorbers according to an exemplifying embodiment of the present inventive concept. Fig. 3a shows the lever unit 100 with an opened enclosure wherein a selected number of components are shown supported on the lower cover 192. Fig. 3a illustrates the first mechanism 310 formed of the holding hook 170, the first spring 165, the position holding arrangement 300 comprised on the mechanism structure 130 and the shock absorber cable winder 150. The holding hook 170 is shown tensioned by the first spring 165 and engaging the first holding position 311 of the position holding arrangement 300 of the first mechanism 310 and the shock absorber cable winder 150 is shown fixedly attached on the mechanism structure 130. Fig. 3a further illustrates the front shock absorber cable, F, and the rear shock absorber cable, R, attached to the shock absorber cable winder 150 and to respective actuators (not shown) positioned on the front shock absorber and on the rear shock absorber. The first lever 110 is therefore shown in Fig. 3a mechanically coupled to the front and rear shock absorbers via the first mechanism 310 such that a rotational movement of the first lever 110 to the first end position, generating a rotational movement of the shock absorber cable winder 150, pulls on the front shock absorber cable, F, and on the rear shock absorber cable, R, resulting in the actuation of the second mode of the shock absorbers. Additionally, Fig. 3a further illustrates the second mechanism 320 formed by the position releasing arrangement 301 comprised on the mechanism structure 130, the second spring 185 and the releasing pin (not visible in Fig. 3a) fixedly attached underneath the second lever 120 at its inner end. Fig. 3a further depicts the second lever 120 engaged at the end of the second release channel 322 of the position releasing arrangement 301 via the releasing pin. Fig. 3a shows the second mechanism 320 also mechanically coupled to the shock absorber cable winder 150 via the mechanism structure 130 such that the second lever 120 is mechanically coupled to the front shock absorber and to the rear shock absorber via the second mechanism 320. It will be appreciated that the first mechanism 310 and the second mechanism 320 are mechanically connected to one another by means of the mechanism structure 130 which structure comprises both the position holding arrangement 300 of the first mechanism 310 and the position releasing arrangement 301 of the second mechanism 320. The mechanism structure 130 thus enables the first mechanism 310 to function connectively with the second mechanism 320.

Fig. 3b schematically shows an inside view of the lever unit 100 shown actuating the second mode of the front and rear shock absorbers according to an exemplifying embodiment of the present inventive concept. Fig. 3b shows the holding hook 170 of the first mechanism 310 engaging the second holding position 312 of the position holding arrangement and shows the second lever 120 engaged at the end of the first release channel 321 of the position releasing arrangement of the second mechanism 320 via the releasing pin (not visible in Fig. 3b). The configuration of the first mechanism 310 and second mechanism 320 depicted in Fig. 3b is obtained from a first rotational movement of the first lever110, from the neutral position to the first end position as illustrated in Fig. 2a, resulting in the rotational movement of the mechanism structure 130 and of the shock absorber cable winder 150. The first rotational movement of the first lever 110 enables holding hook 170 to transition from engaging the first holding position 311, as shown in Fig. 3a, to engaging the second holding position 312. Simultaneously, the first rotational movement of the first lever 110 enables the releasing pin of the second lever 120 to transition from engaging the end of the second releasing channel 322, as shown in Fig. 3a, to engaging the end of the first releasing channel 321. Fig. 3b further illustrate the shock absorber cable winder 150 rotated similarly as the mechanism structure 130 thus applying a pulling force on the front shock absorber cable, F, and on the rear shock absorber cable, R, attached thereon in turn actuating the second mode of the shock absorbers.

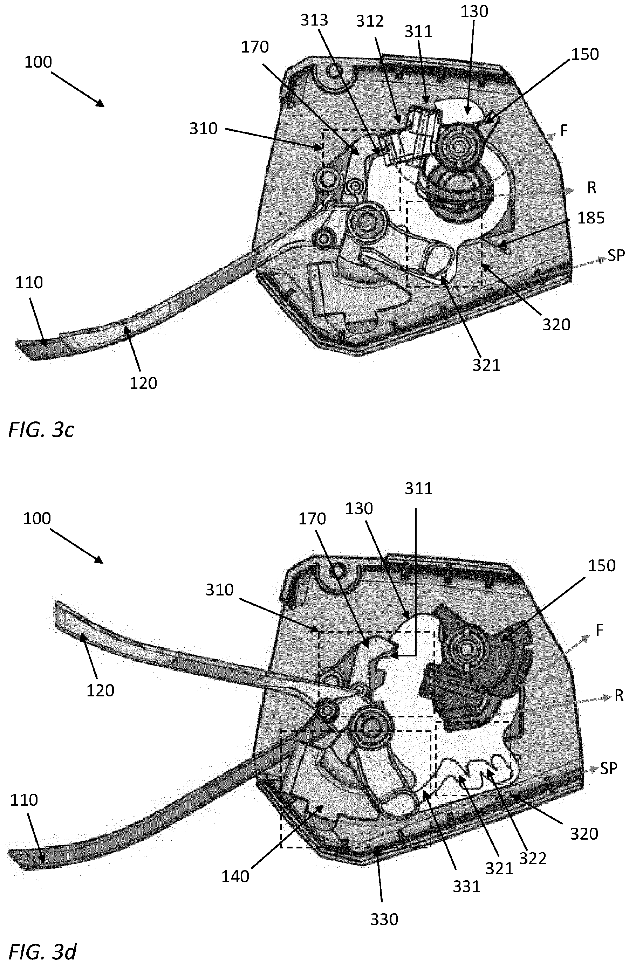

Fig. 3c schematically shows an inside view of the lever unit 100 shown actuating the third mode of the front and rear shock absorbers according to an exemplifying embodiment of the present inventive concept. Fig. 3c shows the holding hook 170 of the first mechanism 310 engaging the third holding position 313 of the position holding arrangement and shows the second lever 120 engaged at the starting end of the first release channel 321 of the position releasing mechanism of the second mechanism 320 via the releasing pin (not visible in Fig. 3c). The configuration of the first mechanism 310 and second mechanism 320 depicted in Fig. 3c is obtained from a second rotational movement of the first lever 110 from the neutral position to the first end position, subsequent to the first rotational movement as illustrated in Fig. 2a. The second rotational movement of the fist lever 110 results in the rotational movement of the mechanism structure 130 and of the shock absorber cable winder 150 shown transparent in Fig. 3c. The second rotational movement of the first lever 110 enables holding hook 170 to transition from engaging the second holding position 312, as shown in Fig. 3b, to engaging the third holding position 313. Simultaneously, the second rotational movement of the first lever 110 enables the releasing pin to transition from engaging the end of the first releasing channel 321, as shown in Fig. 3b, to engaging the starting end of the first releasing channel 321. Fig. 3c further illustrates the shock absorber cable winder 150 rotated similarly as the mechanism structure 130 thus applying a pulling force on the front shock absorber cable, F, and on the rear shock absorber cable, R, attached thereon in turn actuating the third mode of the shock absorbers. Additionally, the configuration of the first mechanism 310 and second mechanism 320 depicted in Fig. 3c may also be obtained from a third rotational movement of the first lever 110, from the neutral position to the second end position, as shown in Fig 2a.

In addition, the configuration of the first and second mechanisms 310, 320 shown in Fig. 3c may transition to the configuration shown in Fig. 3b and to the configuration shown in Fig. 3a upon rotational movements of the second lever 120. Considering the configuration of the first and second mechanisms 310, 320, shown in Fig. 3c, a first rotational movement of the second lever 120, from the main position to the release position as shown in Fig. 2b, is configured to enable the releasing pin to engage the first release channel 321 thus releasing the mechanism structure 130 permitting it to rotate upon the tensioning of the second spring 185. Simultaneously, the first rotational movement of the second lever 120 enables the disengagement pin (not visible in Fig. 3c) to dislodge the holding hook 170 from its engagement of the third holding position 313 permitting the rotation of the mechanism structure 130. The rotation of the mechanism structure 130 consequently permits the rotation of the shock absorber cable winder 150 reducing the tensioning on the shock absorber cables, F, R, resulting in the activation of the second of the shock absorbers. It will be appreciated that the transition of the configuration of the first and second mechanism 310, 320 shown in Fig. 3b to the configuration shown in Fig. 3a may be similarly obtained via a second movement of the second lever 120 from the main position to the release position.

Fig. 3d schematically shows an inside view of the lever unit 100 shown actuating the opened state of the telescopic seat post according to an exemplifying embodiment of the present inventive concept. Fig. 3d illustrates the third mechanism 330 formed by the seat post cable winder 140 and the auxiliary release channel 331. The seat post cable winder 140 is shown in Fig. 3d mounted on the second lever 120 thus permitting the mechanical coupling of the second lever 120 to the telescopic seat post via the third mechanism 330. Fig. 3d further illustrates the second lever 120 at the auxiliary position, as described in Fig. 2b, such that the second lever 120 abuts the seat post cable winder 140 upon its rotation. Fig. 3d further illustrates the rotation of the seat post cable winder 140 generating a pulling force on the seat post cable, SP, enabling the transition of the telescopic seat post from a closed state to and opened state. Moreover, the actuation of the opened state of the telescopic seat post as shown in Fig. 3d requires the first mode of the shock absorbers to be actuated. The holding hook 170 of the first mechanism 310 is therefore shown engaging the first holding position 311 of the holding arrangement comprised on the mechanism structure 130. Upon the rotational movement of the second lever 120 to the auxiliary position, the releasing pin (not visible in Fig. 3d) of the second mechanism 320 transitions from the end of the second release channel 322 of the second mechanism 320 to the end of the auxiliary release channel 331 via said auxiliary release channel 331. It will be appreciated that the auxiliary position of the second lever 120 as depicted in Fig. 3d must be maintained by the user for the opened state of the telescopic seat post to remain as such. The tension generated by the seat post cable, SP, on the set post cable winder 140 will force the second lever 120 to return to its main position when released by the user.

The person skilled in the art realizes that the present invention by no means is limited to the preferred embodiments described above. On the contrary, many modifications and variations are possible within the scope of the appended claims. For example, the actuation of the telescopic seat post may be performed by the first lever 110.

## Claims

1. A lever unit (100) for adjusting a suspension arrangement of a mountain bike, wherein the suspension arrangement comprises a front shock absorber, a rear shock absorber and a telescopic seat post;
the lever unit comprises:
a first lever (110) and a second lever (120) mechanically coupled to the front shock absorber and to the rear shock absorber;
wherein the first lever and the second lever are configured to actuate a plurality of modes of the front shock absorber and the rear shock absorber, and;
wherein at least one of the first lever and second lever is mechanically coupled to the telescopic seat post and configured to actuate said telescopic seat post.

2. The lever unit according to claim 1, wherein the plurality of modes of the front shock absorber and the rear shock absorber comprises a first mode, a second mode and a third mode.

3. The lever unit according to claim 1, wherein the first lever is configured to be selectively moved from a neutral position (200) to a first end position (220) or from a neutral position to a second end position (230).

4. The lever unit according to claim 1, wherein the first lever is mechanically coupled to the front shock absorber and the rear shock absorber via a first mechanism (310) wherein the first mechanism comprises a position holding arrangement (300) in turn comprising at least a first holding position (311), a second holding position (312) and a third holding position (313).

5. The lever unit according to any of the preceding claims, wherein the first holding position, the second holding position and the third holding position of the first mechanism are configured to respectively actuate the first mode, the second mode and the third mode of the front shock absorber and the rear shock absorber.

6. The lever unit according to any of the preceding claims 3-5, wherein, upon a first movement (210) of the first lever from the neutral position to the first end position, the first mechanism is adapted to transition from the first holding position to the second holding position and actuate the second mode of the front shock absorber and the rear shock absorber from the first mode.

7. The lever unit according to claim 6, wherein upon a second movement (215) of the first lever from the neutral position to the first end position, subsequent to the first movement of the first lever, the first mechanism is adapted to actuate the third mode of the front shock absorber and the rear shock absorber from the second mode.

8. The lever unit according to claims 1 to 5, wherein upon a third movement (225) of the first lever from the neutral position to the second end position, the first mechanism is adapted to actuate the third mode of the front shock absorber and the rear shock absorber from the first mode.

9. The lever unit of claim 1, wherein the second lever is configured to be selectively moved from a main position (240) to a release position (260).

10. The lever unit according to claim 9, wherein the second lever is mechanically coupled to the front shock absorber and the rear shock absorber via a second mechanism (320) wherein the second mechanism comprises a position releasing arrangement (301) in turn comprising a first release channel (321) and a second release channel (322).

11. The lever unit according to claim 10, wherein the second mechanism is configured to operate connectively with the first mechanism.

12. The lever unit according to claims 9 to 11, wherein, upon a first movement (250) of the second lever from the main position to the release position, the second mechanism is adapted to actuate the second mode of the front shock absorber and the rear shock absorber from the third mode.

13. The lever unit according to claims 9 to 12, wherein, upon a second movement (255) of the second lever from the main position to the release position, subsequent to the first movement of the second lever, the second mechanism is adapted to actuate the first mode of the front shock absorber and the rear shock absorber from the second mode.

14. The lever unit according to claim 1, wherein the at least one of the first lever and the second lever is mechanically coupled to the telescopic seat post via a third mechanism (330).

15. The lever unit according to claim 14, wherein, upon movement of the at least one of the first lever and the second lever to an auxiliary position (270), the third mechanism is adapted to actuate an opened state of the telescopic seat post from a closed state.
